# EUROPEAN PATENT APPLICATION

(11) **EP 3 444 092 A1**
(43) Date of publication of application: **20.02.2019**
(21) Application number: 17186124.8
(22) Date of filing: 14.08.2017
(51) Int. Cl.: B29C 33/30, B29C 45/37

(54) **MOLD, METHOD FOR FORMING A MOLDED COMPONENT AND METHODS FOR PROVIDING A MOLD**

(71) Applicant: INL - International Iberian Nanotechnology Laboratory, 4715-330 Braga (PT)
(72) Inventor: Gaspar, Joao, 4715-330 Braga (PT); Montelius, Lars, 4715-330 Braga (PT)
(74) Representative: AWA Sweden AB

(57) **Abstract**

The disclosure relates to a mold, to a method for forming a molded component, and to methods for providing a mold. The mold for forming a molded component comprises:
a first mold part, and
a second mold part,
wherein the first and second mold parts are configured to together form a mold cavity and wherein the first and second mold parts are movable relative each other along a first axis for closing or opening the mold,
wherein at least the first mold part comprises an array of a plurality of mold elements, the plurality of mold elements having first end portions configured to together form a molding surface forming at least a part of a surface of the mold cavity, and
wherein the plurality of mold elements are movable relative to each other along the first axis to form a desired topography of the molding surface.

## Description

### Field of invention

The present invention relates generally to injection molding and, more specifically, to a mold for forming a molded component, a method for forming a component, and methods for providing a mold.

### Technical Background

In typical injection molding systems, one or more materials (such as molten plastic or metal) are injected into a mold in order to form a molded component. The mold includes one or more molding chambers for receiving the injected material. After a material is injected, the material is typically allowed to set for a period of time, after which another material may be injected. When the molded component is complete, the molded component is ejected from the mold, and a new cycle of forming a molded component may begin.

Mold assemblies are typically custom manufactured to certain specifications and then mounted to injection molding machines to produce a specific component. Whenever a modification to the mold is desired, retooling of the entire mold assembly is commonly required.

In order to solve the problems associated with the expense of the initial manufacturing of the mold assembly, a variety of adjustable mold assemblies have been develoepd.

US5595771 A discloses a universal modular mold assembly for injection molding machines. The modular mold assembly comprises a fixed side and an ejector side and a plurality of interchangeable modules for shaping a plurality of sides of a component attached to the mold assembly. The interchangeable modules are attached to the mold assembly by slide retainers attached along an interior surface of the ejector side. Slide actuators are attached to the fixed side for engaging the slide modules. The slide actuators move the slide modules inward when the mold halves are pressed together forming a mold cavity and move the slide modules outward when the mold halves are separated.

US2006073235 A1 discloses a convertible injection molding system. The system uses a standardized reusable mold frame and modular molds formed from various combinations of standardized stack components. The mold frame can support one or more stacks. Blank stack components include a cavity block, a core block, a primary support insert, a secondary support insert, an ejector retainer plate, an ejector plate insert, and a clamp plate insert. These components can be assemled into four different configurations with three different opening/closing sequences.

However, there is still room for improvements of the design of adjustable molds, for example with respect to the number of possible configurations, ease and precision of adjustment, and range of possible manufacturing materials.

### Summary of invention

It is an object of the invention to provide an improved adjustable mold which addresses at least some, and preferably all, of the design considerations mentioned above.

According to a first aspect of the inventive concept, these and other objects are achieved in full, or at least in part, by a mold for forming a molded component, the mold comprising
a first mold part, and
a second mold part,
wherein the first and second mold parts are configured to together form a mold cavity and wherein the first and second mold parts are movable relative each other along a first axis for closing or opening the mold,
wherein at least the first mold part comprises an array of a plurality of mold elements, the plurality of mold elements having first end portions configured to together form a molding surface forming at least a part of a surface of the mold cavity, and
wherein the plurality of mold elements are movable relative to each other along the first axis to form a desired topography of the molding surface.

The mold may be especially suited for molding of polymer based components.

By providing at least the first mold part with an array of a plurality of mold elements having first end portions configured to together form a molding surface forming at least a part of a surface of the mold cavity, and wherein the plurality of mold elements are movable relative to each other along the first axis, the molding surface can be adjusted according to the requirements of the molded component to be formed.

Hereby, the mold as such may be manufactured in a cost-effective manner. Further, several different components may be formed by one and the same mold by adjusting at least a sub-set of the plurality of mold elements to form the desired topography. The desired topography preferably represents a topography of the molded component to be formed. In this context, "one and the same mold" may be understood as using one and the same mold for several molding processes wherein the molding surface is adjusted between the respective molding processes in order to form different topographies.

The mold may also be used in a multi-step injection molding process. The mold may be closed with the array mold elements of the first part (or optionally also the array of mold elements of the second part) fixed in a first topography wherein a first injection molding step is performed using this first topography. Thereafter the array of the first mold part and/or the array of the second mold part may be altered into a second topography, such as a topography providing a molding space at least partly formed between the component formed in the first step and the molding surface of the mold elements fixed in the second topography. This may be repeated until the final component is formed. Since the topography of the mold part(s) is easily changed, the mold as such is flexible when it comes to the different shapes that may be formed using this kind of multi-step injection molding process.

Further, the number of possible configurations of the mold can be controlled by modifying the number of mold elements comprised in the plurality of mold elements. Further, the number of possible configurations of the mold can be controlled by modifying the resolution of the array of the plurality of mold elements, in other words, by modifying the size of the first end portions. Still further, the number of possible configurations of the mold can be controlled by adjusting the range of motion of the plurality of mold elements along the first axis.

The first end portions may be further divided into sub-elements which are movable relative to each other along the first axis and which have similar function compared to the first end portions. Hereby, the resolution of the array of the plurality of mold elements, and thus the resolution of the molding surface, can be increased. The array of the plurality of mold elements may be arranged in a two-dimensional array to form the desired topography.

The plurality of mold elements may have first end portions having surface areas being equal in size. However, it is to be understood that some mold elements may have a first end portion having a surface area being different compared to first end portions of other mold elements of the plurality of mold elements. Hereby, a specific part of the mold may be provided with a specific resolution.

Each respective mold element may further comprise a connection portion having complementary surfaces interacting with connection portions of neighboring mold elements, the complementary surfaces allowing relative movement of the plurality of mold elements along the first axis. The connection portions may be designed to prevent relative movement of the plurality of mold elements in at least one direction transverse to the first axis. This may e.g. be accomplished by, as seen in a cross-section across the first direction, rectangular protrusion protruding in a second direction (transverse to the first direction and along the normal of the complementary surfaces) interacting with rectangular recess extending in the second direction (and forming a groove extending in the first direction). The protrusion may in the cross-sectional plane be pulled out of the recess but the surfaces cannot be slid along the third direction transverse to both the first and second directions. Hereby, the plurality of mold elements can securely be aligned along an axis transverse to the first axis.

The complementary surfaces may be interlocking thereby preventing disassembly of the plurality of mold elements along an axis transverse to the first axis. In other words, the complementary surfaces may provide for that the plurality of mold elements are restricted from moving along the axis transverse to the first axis. Moreover, the relative movement of the plurality of mold elements may be restricted to a movement along the first axis by the complementary surfaces. Further, by providing complementary surfaces, a movement of the plurality of mold elements along the first axis can be facilitated. The complementary surfaces may comprise a protrusion on one mold element, and a corresponding recess on another mold element. The protrusion may be tapered. The complementary surfaces may comprise a dovetail joint and/or a similar joint.

The connection portion may extend a distance along each respective mold element along the first axis. Hereby, the relative movement of the plurality of mold elements along the first axis can be controlled. More specifically, the relative distance a mold element is allowed to move along the first axis with respect to its neighboring mold elements can be controlled by adjusting a size of the connection portion of the mold element. More specifically, a range of motion of a mold element along the first axis can be controlled. The range of motion of a mold element along the first axis can be determined as a length of a recess along the first axis subtracted by the length of a corresponding protrusion along the first axis, wherein either the protrusion or recess is arranged on the mold element. For example, a length of a recess of a mold element may be twice the length of a corresponding protrusion on another mold element, thus allowing each of the mold element and the another mold element to move a distance corresponding to half the length of the recess.

It may be noted that each respective mold element does not necessarily have to comprise both a protrusion and a recess.

The plurality of mold elements may be configured to selectively be set in a released position, in which the plurality of mold elements are movable relative to each other along the first axis, and a locked position in which the plurality of mold elements are locked relative to each other. Hereby, each mold element of the plurality of mold elements can be independently moved when in the released position in order to form the desired topography. Further, the plurality of mold elements can be locked relative to each other in the locked position in order to secure the plurality of elements and retain the desired topography.

The locked position may be achieved by providing the array of the plurality of mold elements with an outer frame arranged to selectively apply pressure to the plurality of mold elements along an axis transverse to the first axis. The outer frame may at least partially enclose the array of the plurality of mold elements.

It is to be understood that the locked position does not necessarily imply that the plurality of mold elements are immovable with respect to each other under all circumstances. In contrast, the locked position may be a position wherein a resistance to movement along the first axis is present. The resistance to movement may be caused by frictional forces arising from contact between each of the plurality of mold elements. Typically, he resistance to movement is designed such that it prevents movement of the plurality of mold elements along the first axis under operating conditions of a molding procedure. That is, for molding purposes, the mold elements are considered immovable.

The first mold part may further comprise a continuous flexible sheet member arranged on the first end portions of the plurality of mold elements, wherein the flexible sheet member forms the molding surface.

The flexible sheet member may serve a plurality of purposes.

First, the plurality of mold elements is provided with an outer surface arranged to be in contact with a component material forming the molded component. The flexible sheet member may comprise a material having non-stick properties which facilitates release of the molded component from the mold. Further, the flexible sheet member may comprise a material having a high resistance to wear, corrosion, and the like. Still further, by having a flexible sheet member forming the molding surface, the plurality of mold elements do not necessarily have to be in direct contact with the component material. Hereby, the plurality of mold elements can comprise a material which in itself does not possess a property, e.g. corrosion resistance, which fulfil a requirement of forming a molding surface. However, the flexible sheet member can provide this property, e.g. such corrosion resistance. In other words, by providing a flexible sheet member, the range of materials from which the plurality of mold elements may be made is increased.

Second, a second degree of control may be provided with respect to a formation of the desired topography of the molding surface, the first being the relative movement of the plurality of mold elements. In particular, a material comprised in the flexible sheet member can be chosen such that the flexible sheet member conforms substantially to the desired topography of the molding surface. This can be achieved by choosing a material having a specific elastic property, such as a hyper elastic property. Further, a material comprised in the flexible sheet member can be chosen such that the flexible sheet member bridges sharp transitions between the plurality of mold elements. This can be achieved for example by choosing a material having a specific elastic property, for example a close to inelastic property. In this latter case, the sheet may have a non-loaded shape being close to the shape of the component to be formed. The material bridging sharp transitions may alternatively be semi-flexible in the sense that it is flexible enough to assume the overall shape of the molding surface but not flexible enough to assume a pixelated shape formed by the transitions between the plurality of mold elements.

A number of mold elements may be removed from the array. Hereby, a size of the array, and therefore the mold, can be adjusted. It should be noted that a removed mold element may be re-inserted into the array again. Further, a number of mold elements may be inserted into the array to add to the plurality of mold elements. An advantage with this arrangement is that the size of the mold can be adjusted, e.g. to conform to specific processing requirements of molding equipment.

According to a second aspect of the inventive concept, these and other objects are achieved in full, or at least in part, by a method for forming a component formed of a component material, the method comprising
providing a mold comprising a first mold part and a second mold part, wherein the first and second mold parts are configured to together form a mold cavity and wherein the first and second mold parts are movable relative each other along a first axis for closing or opening the mold, wherein at least the first mold part comprises an array of a plurality of mold elements, the plurality of mold elements having first end portions configured to together form a molding surface forming at least a part of a surface of the mold cavity, and wherein the plurality of mold elements are movable relative to each other along the first axis to form a desired topography of the molding surface;
adjusting at least a sub-set of the plurality of mold elements to form the desired topography of the molding surface;
moving the first and second mold parts together thereby forming the mold cavity;
injecting component material into the mold cavity;
separating the mold parts from each other; and
removing the thus formed component from the mold.

The component material may be polymer based.

By providing a mold comprising a first mold part and a second mold part, wherein the first and second mold parts are configured to together form a mold cavity and wherein the first and second mold parts are movable relative each other along a first axis for closing or opening the mold, wherein at least the first mold part comprises an array of a plurality of mold elements, the plurality of mold elements having first end portions configured to together form a molding surface forming at least a part of a surface of the mold cavity, and wherein the plurality of mold elements are movable relative to each other along the first axis to form a desired topography of the molding surface, several advantages are achieved which have been described above in relation to the first aspect.

This method of forming a component formed of a component material allows several different components to be formed by one and the same mold by adjusting at least the sub-set of the plurality of mold elements to form the desired topography. The desired topography preferably represents a topography of the molded component to be formed. In this context, "one and the same mold" is to be understood as using one and the same mold for several molding processes wherein the molding surface is adjusted between the respective molding processes in order to form different topographies.

The step of adjusting the sub-set of the plurality of mold elements may comprise providing a template component, and bringing the template component into abutment with the first end portions of the sub-set of the plurality of mold elements thereby setting the array of the plurality of mold elements forming the desired topography of the molding surface.

Hereby, a template component can be used in order to form the desired topography for forming a molded component. The template component preferably has a similar topography to the molded component to be formed. However, as is readily appreciated by the person skilled in the art, it is equally possible that the template component and molded component to be formed have different topographies. For example, the template component may be slightly larger than the molded component to be formed, allowing the formed molded component to be trimmed in order to achieve a formed molded component having a similar topography to the template component. Further, in some cases it might be advantageous to produce a simple template component having roughly the same topography as the to be formed, wherein the template component is made from e.g. a cheaper material than the to be formed molded component, i.e. the component material.

Before adjusting the sub-set of the plurality of mold elements, some of the plurality of mold elements may be required to be set in a neutral position depending on the desired topography to be formed. In this context, a mold element is defined to be in a neutral position if the mold element is movable along the first axis in a direction away from an intended template component abutting the mold element. A mold element may be set in a neutral position by moving the mold element along the first axis in a direction towards an intended template component abutting the mold element. The movement may be provided by a maneuverable array of setting elements as described in the following paragraphs.

The step of adjusting the sub-set of the plurality of mold elements may comprise providing a maneuverable array of setting elements, bringing the array of setting elements into abutment with a second end portion of the sub-set of the plurality of mold elements, the second end portion being opposite the first end portion, and maneuvering the setting elements to move along the first axis, thereby setting the sub-set of the plurality of mold elements forming the desired topography of the molding surface.

Each setting element of the maneuverable array may correspond to a single mold element of the sub-set of the plurality of mold elements. Further, it is to be understood that the setting elements may be brought into abutment with the first end portion of the sub-set of the plurality of mold elements.

The maneuverable array of setting elements may be configured to be instructed by software code to form a desired topography. In other words, each setting element may move a distance along the first axis as instructed by the software code, thus adjusting the sub-set of the plurality of mold elements. Hereby, the mold can quickly be adjusted to form the desired topography.

In one example, the array of setting elements is operated by an array of pistons, each piston corresponding to a respective setting element.

In one example, the array of setting elements is operated by an array of servomotors, each servomotor acting on a thread or toothed rack on respective setting element.

The setting elements and second end portion of the sub-set of the plurality of mold elements may be configured to interlock with each other such that the setting elements can pull the sub-set of the plurality of mold elements along the first axis. Hereby, the sub-set of the plurality of mold elements can be pulled and pushed along the first axis.

The method may further comprise setting the sub-set of the plurality of mold elements in a locked position in which each mold element of the sub-set of the plurality of mold elements are locked relative each other.

According to a third aspect of the inventive concept, these and other objects are achieved in full, or at least in part, by a method for providing a mold, the method comprising:
providing a template component;
providing a mold part comprising an array of a plurality of mold elements, the plurality of mold elements having first end portions configured to together form a molding surface forming at least a part of a surface of a mold cavity, and wherein the plurality of mold elements are movable relative to each other along a first axis to form a desired topography of the molding surface;
bringing the template component into abutment with the first end portions of at least a sub-set of the plurality of mold elements thereby setting the sub-set of the plurality of mold elements forming the desired topography of the molding surface.

The features and advantages of providing a template component have been disclosed above in conjunction with the second aspect of the inventive concept.

According to a fourth aspect of the inventive concept, these and other objects are achieved in full, or at least in part, by a method for providing a mold, the method comprising:
providing a mold part comprising an array of a plurality of mold elements, the plurality of mold elements having first end portions configured to together form a molding surface forming at least a part of a surface of a mold cavity, and wherein the plurality mold elements are movable relative to each other along a first axis to form a desired topography of the molding surface;
providing a maneuverable array of setting elements;
bringing the array of setting elements into abutment with a second end portion of at least a sub-set of the plurality of mold elements, the second end portion being opposite the first end portion; and
maneuvering the setting elements to move along the first axis, thereby setting the sub-set of the plurality of mold elements forming the desired topography of the molding surface.

The features and advantages of providing a maneuverable array of setting elements have been disclosed above in conjunction with the second aspect of the inventive concept.

### Brief description of the drawings

The invention will by way of example be described in more detail with reference to the appended schematic drawings, which shows a presently preferred embodiment of the invention.
FIGS. 1 a and 1 b schematically illustrate a side view of a mold;
FIG. 2a shows a perspective view of a first mold part comprising an array of a plurality of mold elements;
FIG. 2b shows a top view of a first mold part comprising an array of a plurality of mold elements;
FIGS. 3a - 3d show a cross section of a first mold part taken along the line III of FIG. 2b;
FIG. 4 show a cross section of a first mold part taken along the line IV of FIG. 3d;
FIGS. 5a - 5b show a cross section of a first mold part taken along the line V of FIG. 3d;
FIG. 6 shows a side view of a first mold part and a maneuverable array;
FIGS. 7a and 7b show a first mold part and a template component.

### Detailed description of preferred embodiments

It is contemplated that there are numerous modifications of the embodiments described herein, which are still within the scope of the invention as defined by the appended claims.

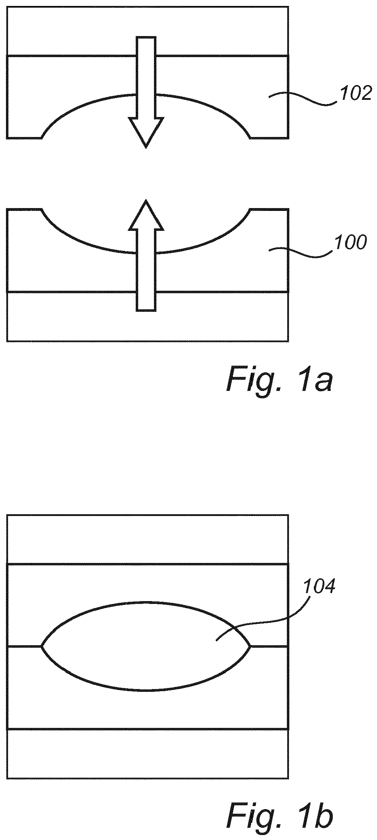

FIGS. 1a and 1b disclose the general function of a mold for forming a molded component. The mold comprises a first mold part 100, and a second mold part 102. The two mold parts 100, 102 are typically moved towards each other in order to form a mold cavity 104. A component material can subsequently be injected into the mold cavity 104 in order to form a molded component. The two mold parts 100, 102 are moveable relative each other along a first axis for closing or opening the mold. The axis is parallel to the arrows illustrated in FIG. 1 a.

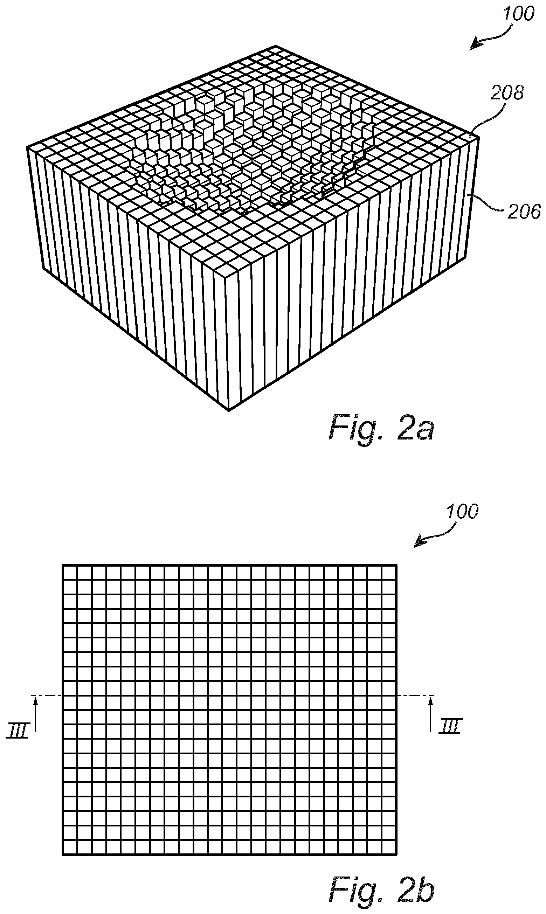

FIG. 2a disclose a first mold part 100. The first mold part 100 is part of a mold for forming a molded component, wherein the mold comprises the first mold part 100, and a second mold part (not shown). The first 100 and second mold parts are configured to together form a mold cavity and are movable relative each other along a first axis for closing or opening the mold.

The first mold part comprises a two-dimensional array of a plurality of mold elements 206, the plurality of mold elements 206 have first end portions 208 configured to together form a molding surface forming at least a part of a surface of the mold cavity. The plurality of mold elements 206 are movable relative to each other along the first axis to form a desired topography of the molding surface. In the illustrated example, the desired topography represents a hemi-sphere. A second part of the mold can be adjusted in order to form a similar topography, such that when the two mold parts are brought together, a mold cavity representing a sphere is formed.

In the illustrated example, the plurality of mold elements 206 have first end portions 208 in the shape of a rectangle. However, the plurality of mold elements 206 may have first end portions 208 in the shape of triangles, hexagons, or the like.

Further, the first mold part 100 is here illustrated as a rectangular block. It is to be understood that other shapes are possible within the scope of the inventive concept. For example, the size and/or arrangement of the array of plurality of mold elements 206 can be chosen to fit specific requirements of molding equipment with which the mold is to be used.

It may be noted that although it is most preferred, each mold element of the plurality of mold elements 206 need not be of equal length along the first axis.

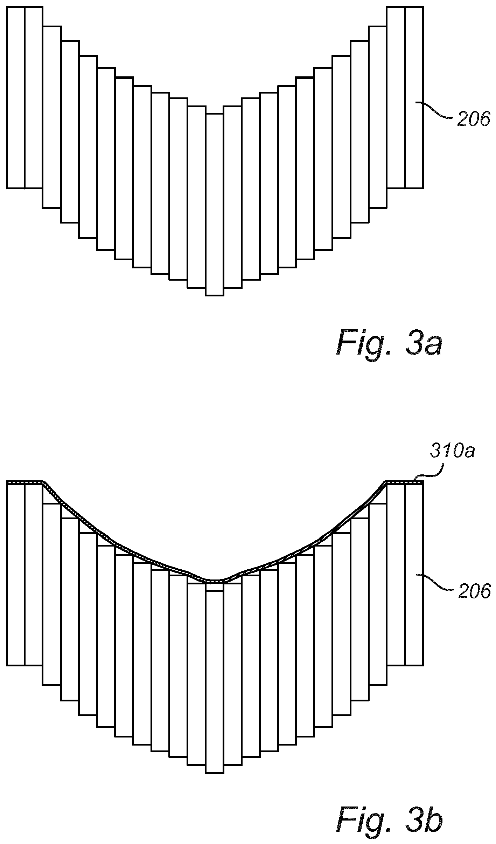

FIGS. 3a-3d show a cross section of the first mold 100 part taken along the line III as shown in FIG. 2b.

In FIG. 3a, a sub-set of the plurality of mold elements 206 has been adjusted in order to form a desired topography of the molding surface.

As indicated in FIG. 3b, a continuous flexible sheet member 310a can be arranged on the first end portions of the plurality of mold elements 206. Hereby, the flexible sheet member 310a forms the molding surface. The flexible sheet member is configured to bridge gaps between the respective mold elements of the plurality of mold elements 206. One way of achieving this effect is to manufacture the flexible sheet member 310a from a material having appropriate elasticity. As can be seen, the flexible sheet member 310a shields the plurality of mold elements 206 from the mold cavity. Thus, a component material injected into the mold cavity will not come into direct contact with the plurality of mold elements 206. Hereby, a greater degree of freedom with respect to a selection of component material and/or a selection of construction material of the plurality of mold elements 206 is achieved.

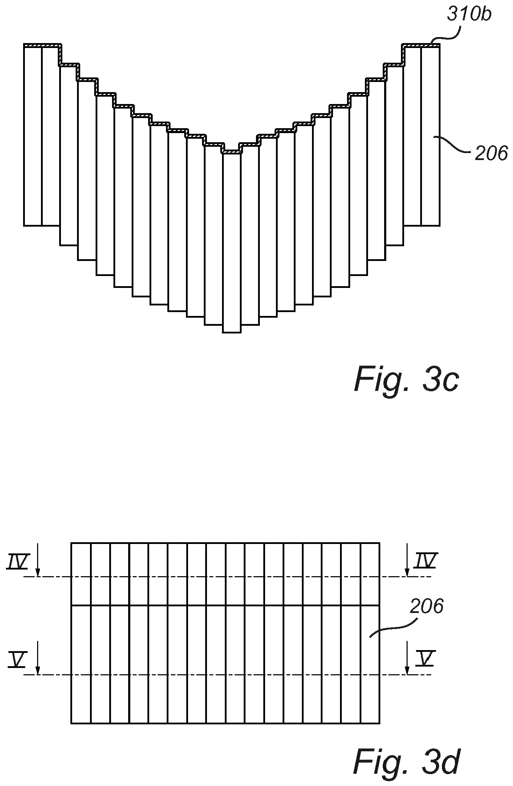

As indicated in FIG. 3c, a flexible sheet member 310b can be configured to conform substantially to the desired topography of the molding surface. In other words, the flexible sheet member 310b substantially follows the topography of the plurality of mold elements 206.

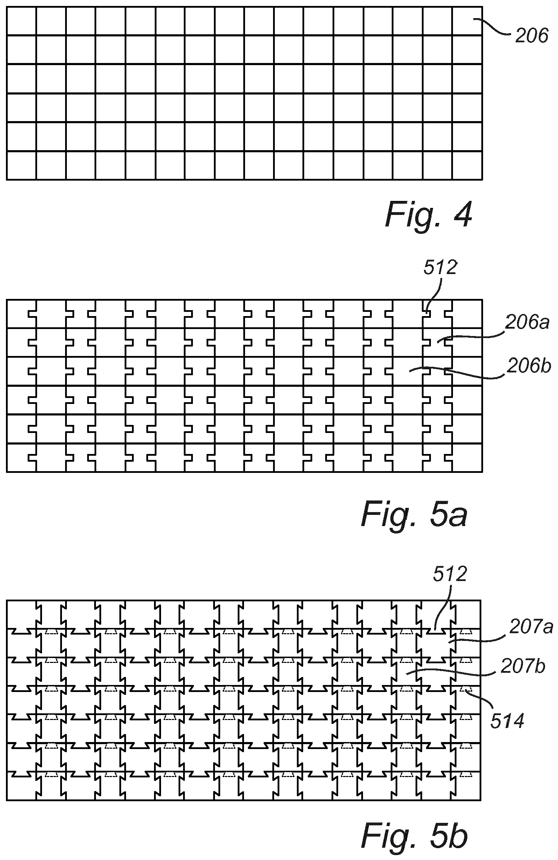

FIG. 4, shows a cross section of the first mold part taken along the line IV as indicated in FIG. 3d. FIG. 3d illustrates a plurality of mold elements 206. As can be seen, each of the plurality of mold elements 206 have flat side walls abutting neighboring mold elements. It can be noted that the plurality of mold elements 206 are equal in size. However, it is to be understood that some mold elements may have a first end portion having a surface area being different compared to first end portions of other mold elements of the plurality of mold elements. Hereby, a specific part of the mold may be provided with a specific resolution.

FIGS. 5a and 5b show a cross section of the first mold part taken along the line V as indicated in FIG. 3d.

In the embodiment disclosed in FIG. 5a, each respective mold element 206a, 206b comprises a connection portion 512 having complementary surfaces interacting with connection portions 512 of neighboring mold elements. The complementary surfaces allow relative movement of the plurality of mold elements along the first axis. It is to be noted that some mold elements 206b comprise a first part of the connection portion 512, e.g. a protrusion, while other mold elements 206a comprise a second part of the connection portion 512, e.g. a complementary surface such as a recess. It is also to be noted that although the illustrated example only shows connection portions 512 between mold elements along one axis, it is possible to provide connection portions 512 such that the plurality of mold elements are connected along two axes.

In the embodiment disclosed in FIG. 5b, each respective mold element 207a, 207b comprises a connection portion 512 having complementary surfaces interacting with connection portions 512 of neighboring mold elements. The complementary surfaces allow relative movement of the plurality of mold elements along the first axis. In addition, the complementary surfaces are interlocking, thereby preventing disassembly of the plurality of mold elements along an axis transverse to the first axis. The complementary surfaces comprise a dovetail joint. As indicated by the dashed lines 514, all sides of the mold elements 207a, 207b need not to have connection portions 512. It is however preferable that the plurality of mold elements are provided with connection portions 512 arranged such that each mold element is restricted from moving in the plane depicted in FIG. 5b.

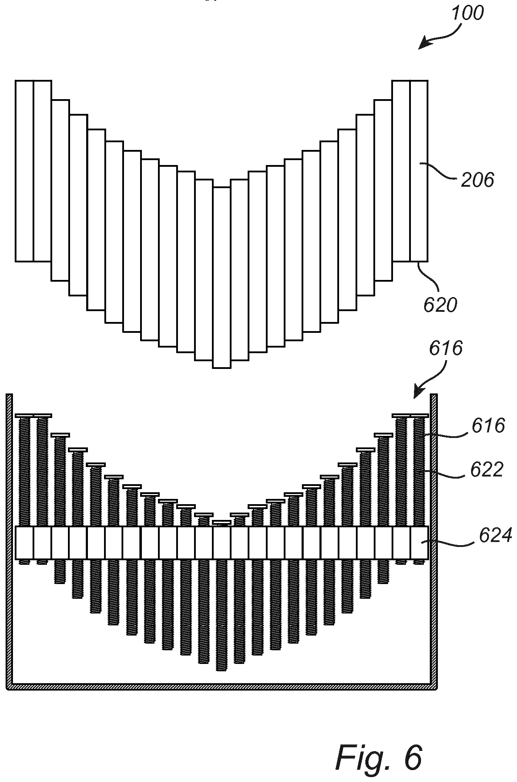

Referring now to FIG. 6, a maneuverable array of setting elements 616 and a first mold part 100 are illustrated in a side view. The maneuverable array of setting elements 616 comprises a plurality of setting elements 618. Each of the plurality of mold elements 206 corresponds to a setting element 618. Each setting element 618 is movable along the first axis. Hereby, when a setting element 618 abuts a second end portion 620 of a mold element 206, the mold element 206 can be adjust along the first axis by moving the setting element 618 along the first axis. By adjusting at least a sub-set of the plurality of mold elements 206, a desired topography of the molding surface can be formed. Further, the setting elements 618 and second end portions 620 of the plurality of mold elements 206 can be configured to interlock with each other such that the setting elements 618 can pull the plurality of mold elements 206 along the first axis. Hereby, the plurality of mold elements 206 are moveable in both directions along the first axis.

A movement of the setting elements 618 can be provided by a threaded bolt 622 and a fixed element 624 comprising grooves corresponding to the threaded bolt 622. Thus, when the bolt 622 is rotated along its long axis, the setting element 618 is moved along the first axis. It is to be noted that other arrangements for providing a movement of the setting elements 618 are possible within the scope of the inventive concept.

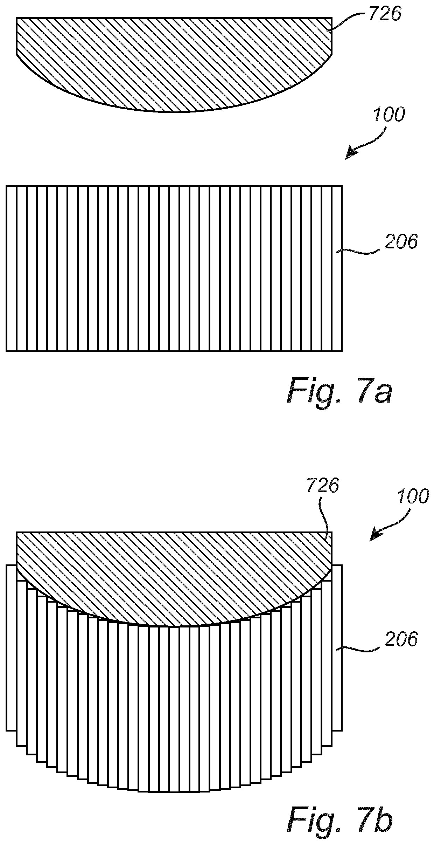

Referring now to FIG. 7a and 7b, a first mold part 100 and a template component 726 are illustrated. A sub-set of the plurality of mold elements 206 are adjusted by bringing the template component 726 into abutment with the first end portion of the sub-set of the plurality of mold elements 206. Hereby, a desired topography of the molding surface is formed. The topography of the molding surface preferably represents a topography of the template component 726. The sub-set of the plurality of mold elements 206 are preferably set in a released position before adjusting the same by abutting the template component with the first end portion of the sub-set of the plurality of mold elements 206. After the desired topography of the molding surface has been achieved, the sub-set of the plurality of mold elements 206 can be set in a locked position.

## Claims

1. Mold for forming a molded component, the mold comprising
a first mold part (100), and
a second mold part (102),
wherein the first and second mold parts (100, 102) are configured to together form a mold cavity (104) and wherein the first and second mold parts (100, 102) are movable relative each other along a first axis for closing or opening the mold,
wherein at least the first mold part (100) comprises an array of a plurality of mold elements (206; 206a, 206b; 207a, 207b), the plurality of mold elements (206; 206a, 206b; 207a, 207b) having first end portions (208) configured to together form a molding surface forming at least a part of a surface of the mold cavity (104), and
wherein the plurality of mold elements (206; 206a, 206b; 207a, 207b) are movable relative to each other along the first axis to form a desired topography of the molding surface.

2. The mold according to claim 1, wherein the array of the plurality of mold elements (206; 206a, 206b; 207a, 207b) is arranged in a two-dimensional array to form the desired topography.

3. The mold according to claim 1 or 2, wherein each respective mold element (206; 206a, 206b; 207a, 207b) further comprises a connection portion (512) having complementary surfaces interacting with connection portions (512) of neighboring mold elements (206; 206a, 206b; 207a, 207b), the complementary surfaces allowing relative movement of the plurality of mold elements (206; 206a, 206b; 207a, 207b) along the first axis.

4. The mold according to claim 3, wherein the complementary surfaces are interlocking thereby preventing disassembly of the plurality of mold elements (206; 206a, 206b; 207a, 207b) along an axis transverse to the first axis.

5. The mold according to any one of the preceding claims, wherein the plurality of mold elements (206; 206a, 206b; 207a, 207b) are configured to selectively be set in a released position, in which the plurality of mold elements (206; 206a, 206b; 207a, 207b) are movable relative to each other along the first axis, and a locked position in which the plurality of mold elements (206; 206a, 206b; 207a, 207b) are locked relative to each other.

6. The mold according to any one of the preceding claims, wherein the first mold part (100) further comprises a continuous flexible sheet member (310a; 310b) arranged on the first end portions (208) of the plurality of mold elements, (206; 206a, 206b; 207a, 207b) wherein the flexible sheet member (310a; 310b) forms the molding surface.

7. A method for forming a component formed of a component material, the method comprising
providing a mold comprising a first mold part (100) and a second mold part (102), wherein the first and second mold parts (100, 102) are configured to together form a mold cavity (104) and wherein the first and second mold parts (100, 102) are movable relative each other along a first axis for closing or opening the mold, wherein at least the first mold part (100) comprises an array of a plurality of mold elements (206; 206a, 206b; 207a, 207b), the plurality of mold elements (206; 206a, 206b; 207a, 207b) having first end portions (208) configured to together form a molding surface forming at least a part of a surface of the mold cavity (104), and wherein the plurality of mold elements (206; 206a, 206b; 207a, 207b) are movable relative to each other along the first axis to form a desired topography of the molding surface;
adjusting at least a sub-set of the plurality of mold elements (206; 206a, 206b; 207a, 207b) to form the desired topography of the molding surface;
moving the first and second mold parts (100, 102) together thereby forming the mold cavity (104);
injecting component material into the mold cavity (104);
separating the mold parts (100, 102) from each other; and
removing the thus formed component from the mold.

8. The method according to claim 7, wherein the component material is polymer based.

9. The method according to claim 7 or 8, wherein adjusting at least a sub-set of the plurality of the mold elements (206; 206a, 206b; 207a, 207b) comprises providing a template component (726), and bringing the template component (726) into abutment with the first end portions (208) of the sub-set of the plurality of mold elements (206; 206a, 206b; 207a, 207b) thereby setting the sub-set of the plurality of mold elements (206; 206a, 206b; 207a, 207b) forming the desired topography of the molding surface.

10. The method according to any one of claims 7 to 9, wherein adjusting at least a sub-set of the plurality of mold elements (206; 206a, 206b; 207a, 207b) comprises providing a maneuverable array of setting elements (616), bringing the array of setting elements (616) into abutment with a second end portion (620) of the sub-set of the plurality of mold elements (206; 206a, 206b; 207a, 207b), the second end portion (620) being opposite the first end portion (208), and maneuvering the setting elements (618) to move along the first axis, thereby setting the sub-set of the plurality of mold elements (206; 206a, 206b; 207a, 207b) forming the desired topography of the molding surface.

11. The method according to claim 10, wherein the setting elements (618) and second end portion (620) of the sub-set of the plurality of mold elements (206; 206a, 206b; 207a, 207b) are configured to interlock with each other such that the setting elements (618) can pull the sub-set of the plurality of mold elements (206; 206a, 206b; 207a, 207b) along the first axis.

12. The method according to any one of claims 7 to 11, further comprising setting the sub-set of the plurality of mold elements (206; 206a, 206b; 207a, 207b) in a locked position in which each mold element (206; 206a, 206b; 207a, 207b) of the sub-set of the plurality of mold elements are locked relative each other.

13. A method for providing a mold, the method comprising:
providing a template component (726);
providing a mold part (100) comprising an array of a plurality of mold elements (206; 206a, 206b; 207a, 207b), the plurality of mold elements (206; 206a, 206b; 207a, 207b) having first end portions (208) configured to together form a molding surface forming at least a part of a surface of a mold cavity (104), and wherein the plurality of mold elements (206; 206a, 206b; 207a, 207b) are movable relative to each other along a first axis to form a desired topography of the molding surface;
bringing the template component (726) into abutment with the first end portions (208) of at least a sub-set of the plurality of mold elements (206; 206a, 206b; 207a, 207b) thereby setting the sub-set of the plurality of mold elements (206; 206a, 206b; 207a, 207b) forming the desired topography of the molding surface.

14. A method for providing a mold, the method comprising:
providing a mold part (100) comprising an array of a plurality of mold elements (206; 206a, 206b; 207a, 207b), the plurality of mold elements (206; 206a, 206b; 207a, 207b) having first end portions (208) configured to together form a molding surface forming at least a part of a surface of a mold cavity (104), and wherein the plurality of mold elements (206; 206a, 206b; 207a, 207b) are movable relative to each other along a first axis to form a desired topography of the molding surface;
providing a maneuverable array of setting elements (616);
bringing the array of setting elements (616) into abutment with a second end portion (620) of at least a sub-set of the plurality of mold elements (206; 206a, 206b; 207a, 207b), the second end portion (620) being opposite the first end portion (208); and
maneuvering the setting elements (618) to move along the first axis, thereby setting the sub-set of the plurality of mold elements (206; 206a, 206b; 207a, 207b) forming the desired topography of the molding surface.

15. The method according to claim 14, wherein the setting elements (618) and second end portion (620) of the sub-set of the plurality of mold elements (206; 206a, 206b; 207a, 207b) are configured to interlock with each other such that the setting elements (618) can pull the sub-set of the plurality of mold elements (206; 206a, 206b; 207a, 207b) along the first axis.
